# EUROPÄISCHE PATENTANMELDUNG

(11) **EP 2 444 450 A1**
(43) Veröffentlichungstag der Anmeldung: **25.04.2012**
(21) Anmeldenummer: 10188045.8
(22) Anmeldetag: 19.10.2010
(51) Int. Cl.: C08J 3/24

(54) **Zusammensetzungen zur Herstellung abhäsiver Beschichtungen**

(71) Anmelder: HINTERWALDNER CONSULTING & PARTNER (GBR), 85614 Kirchseeon (DE)
(72) Erfinder: Hinterwaldner, Rudolf, 85614 Kirchseeon (DE); Hinterwaldner, Stephan, 85614 Kirchseeon (DE)
(74) Vertreter: Reitstötter - Kinzebach

(57) **Zusammenfassung**

Die vorliegende Erfindung betrifft Zusammensetzungen, die eine olefinische Komponente und eine mit der olefinischen Komponente reaktive oder härtbare Verbindung enthalten und die zur Herstellung von Trennschichten geeignet sind.

## Beschreibung

Die vorliegende Erfindung betrifft Zusammensetzungen, die zur Herstellung abhäsiver Beschichtungen geeignet sind.

In der Technik spielen abhäsive Beschichtungen eine bedeutsame Rolle. Man will dabei Oberflächen so ausrüsten, dass adhäsive Stoffe nicht fest haften und sich rückstandsfrei wieder entfernen lassen. Abhäsive Beschichtungen haben insbesondere als Trennbeschichtungen für Trennsubstrate in der Klebefolien- und Klebebandherstellung besondere Bedeutung erlangt.

Zur abhäsiven Ausrüstung von Oberflächen ist im Stand der Technik eine Vielzahl von Stoffen beschrieben, welche die erwünschten Funktionen in unterschiedlichem Maße erfüllen. Heutzutage werden zur abhäsiven Ausrüstung von Oberflächen weitgehend Silikontrennmittel auf Basis von Polyorganosiloxanen (Silikone) eingesetzt. Da Silikone jedoch um ein vielfaches teurer sind als konventionelle abhäsive Stoffe, wie Paraffin, Wachs und Metallseifen, lassen sie sich aus Wirtschaftlichkeitsgründen nicht immer in den notwendigen Mengen einsetzen, um die geforderte Abhäsion zu erzielen. Es hat daher nicht an Bemühungen gefehlt, die Kosten bei der abhäsiven Ausrüstung von Oberflächen durch bessere wirtschaftliche Lösungen zu senken. Diese Bemühungen haben jedoch zu keinen zufriedenstellenden Ergebnissen geführt, weil es unter anderem an Silicone-Materialien fehlt, die ein schnelleres Härten zulassen, um die Bahngeschwindigkeiten beim Beschichten zu erhöhen. Auch niedrige abgestufte Trennwerte bei Silicone-Beschichtungen sind eine noch nicht befriedigend gelöste Aufgabe,denn beim Ausrüsten von Oberflächen mit Silicon-Materialien lassen sie sich nur dann reduzieren, wenn höhere Reaktivität gegeben ist. Dabei spielen die relativ hohe Härtung bzw. Vernetzungstemperaturen wie auch die Bahngeschwindigkeiten eine entscheidende Rolle. Bei niedrigen Härtungs- und Vernetzungstemperaturen kann die Substratfeuchte bei cellulosebasierten Substraten optimaler reguliert werden. Niedrige Temperaturen sind auch beim Ausrüsten von thermoplastischen Substraten zum Härten bzw. Vernetzen notwendig. Diese und weitere Nachteile sind mit handelsüblichen Produkten gegeben.

Beim freiradikalischen Polymerisieren, Härten bzw. Vernetzen von ungesättigten Verbindungen, wie Polyester-, Acryl- und Methacrylharzen, inhibiert der molekulare Luftsauerstoff die Reaktionen an den Oberflächen. Der Luftsauerstoff macht dabei die Radikale unwirksam, wodurch die Härtungsreaktion unterbunden wird und die Oberfläche klebrig bleibt. Man hat versucht, die Oberfläche durch Abdecken mit Folie, Glasplatten und dergleichen vor dem Luftsauerstoff zu schützen. Da dies für den praktischen Einsatz jedoch viel zu umständlich ist, wurde ein Paraffinzusatz vorgeschlagen (DE-PS 9 48 818). Das Paraffin schwimmt während der Härtung an die Oberfläche auf und bildet dort eine Schutzschicht gegenüber dem Luftsauerstoff. Aus dem Paraffinzusatz erwachsen jedoch Probleme, so zum Beispiel jenes, dass Paraffin in den härtbaren Massen bei niedrigen Temperaturen auskristallisiert und bei hohen Temperaturen nicht aufschwimmt. Ebenfalls aus den Eigenschaften des Paraffins erklärt sich, dass eine Härtung paraffinhaltiger Massen bei zu hohen Temperaturen nicht möglich ist. Somit lassen sich mit paraffinhaltigen härtbaren Massen keine kurzen Reaktionszeiten bei erhöhter Temperatur erreichen, weil man erst dann erwärmen darf, wenn das Paraffin vollständig aufgeschwommen ist. Die Industrie wartet schon lange auf verbesserte Lösungen.

Der vorliegenden Erfindung liegt daher die Aufgabe zugrunde, Mittel zur Verfügung zu stellen, welche eine kostengünstige Herstellung von Trennbeschichtungen mit guten Trenneigenschaften ermöglichen.

Überraschenderweise wurde nun gefunden, dass diese Aufgabe durch den Einsatz von Verbindungen der unten angegebenen Formeln I und II gelöst wird.

Gegenstand der vorliegenden Erfindung sind daher Zusammensetzungen, umfassend
a) wenigstens eine Verbindung der Formel I oder II 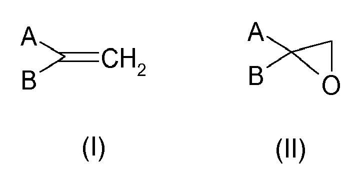 worin A und B, die gleich oder verschieden sein können, für eine verzweigte oder unverzweigte Alkylgruppe mit 3 bis 130 Kohlenstoffatomen stehen, wobei jedoch mindestens einer der Reste A und B für eine verzweigte oder unverzweigte Alkylgruppe mit mindestens 6 Kohlenstoffatomen steht, und
b) wenigstens eine mit einer Verbindung der Formel (I) oder (II) reaktive oder härtbare Vebindung.

Gemäß einer Ausführungsform weisen die Reste A und B zusammen mindestens 12 Kohlenstoffatome auf.

Gemäß einer weiteren Ausführungsform steht mindestens einer der Reste A und B für eine verzweigte oder unverzweigte Alkylgruppe mit 4 bis 40 Kohlenstoffatomen und insbesondere für eine geradkettige oder verzweigte Alkylgruppe mit 6 bis 24 Kohlenstoffatomen. Gemäß einer weiteren Ausführungsform stehen A und B jeweils für eine verzweigte oder unverzweigte Alkylgruppe mit 6 bis 24 Kohlenstoffatomen.

Gemäß einer weiteren Ausführungsform sind A und B verschieden.

Gemäß einer weiteren Ausführungsform steht A für eine unverzweigte Alkylgruppe mit 8 bis 12, insbesondere 10 Kohlenstoffatomen und B für eine unverzweigte Alkylgruppe mit 6 bis 10, insbesondere 8 Kohlenstoffatomen.

Die Verbindungen der Formeln I und II sind bekannt, im Handel erhältlich und/oder nach dem Fachmann bekannten Verfahren herstellbar, beispielsweise nach den in der EP 5 133 380 A1, EP 1 849 757 A1, EP 1 852 408 A1 und EP 1 908 746 A1 beschriebenen Verfahren. Die Herstellung der Verbindungen der Formel II erfolgt zweckmäßigerweise durch Epoxidierung der Verbindungen der Formel I in üblicherweise, beispielsweise durch Oxidation mit Persäuren, wie Perbenzoesäure, Wasserstoffperoxid, t-Butylhydroperoxid etc., siehe beispielsweise Houben-Weyl, Band V 1/3, 1965.

Die Verbindungen der Formeln I und II besitzen hohe Reaktivität, geringe Flüchtigkeit, hohe thermische Stabilität, geringe Viskosität und sind bei Raumtemperatur flüssig.

Als Komponente (b) sind geeignet:
A) siliciumorganische Verbindungen, die mit einer Verbindung der Formel I oder II reaktiv sind. Derartige siliciumorganische Verbindungen sind Silane (siliciumorganische Verbindungen, die noch Wasserstoffatome an den Siliciumatomen enthalten), die Additionsreaktionen mit den Verbindungen der Formel I oder II eingehen können. Weitere geeignete siliciumorganische Verbindungen sind solche, die nach einem radikalischen Mechanismus reagieren können, beispielsweise initiiert durch Radikale bildende Initiatoren, wie Peroxide, oder Bestrahlung sowie siliciumorganische Verbindungen, die nach einem Radikal-/Ionen-/Mechanismus reagieren können und solche, die Edelmetall-katalysierte Reaktionen eingehen können. Außerdem sind siliciumorganische Verbindungen geeignet, die Kondensationsreaktionen bzw. kondensationsvernetzende Reaktionen eingehen können.

Als Komponente (b) eignen sich somit unverzweigte, verzweigte und/oder cyclische Silane, Silanole, Polysilane, Polyorganosiloxane, Polysilazane, Polysilthiane, Polysilalkenyle, Polysilarylene, Polysilalkensiloxane, Polysilarylensiloxane, Polysilalkylenesilane, Polysilarylensilane mit jeweils mindestens einer Silicium- und/oder organofunktionellen Gruppe. Bei diesen Gruppen handelt es sich vorzugsweise um folgende:
SiH, Si-OH, Si-Halogen, Si-SH, -CH=CH₂ oder -O-CO-CR=CH₂, wobei R für H oder Methyl steht.

Epoxihaltige siliciumorganische Verbindungen, die unter UV-Bestrahlung nach einem kationischen Härtungsmechanismus aushärten sind beispielsweise in US 4,421,904; US 4,547,431; US 4,952,657; US 5,217,805; US 5,279,860; US 5,340,898; US 5,360,833; US 5,650,453; US 5,866,261 und US 9,573,020 beschrieben.

Siliciumorganische Verbindungen, die nach einem freien radikalischen Polymerisationsmechanismus durch Bestrahlung mit UV-Licht oder Elektronenstrahlen aushärten, sind beispielsweise beschrieben in US 4,201,808; US 4,568,566; US 4,678,846; US 5,494,979; US 5,510,190; US 5,552,506; US 5,804,301; US 5,891,530; US 5,977,282; US 6,211, 322; US 4,301,268 und US 4,306,050 beschrieben.

Zweckmäßige Ausführungsformen dieser siliciumorganischen Verbindungen sind die folgenden:
A1) Epoxysilikone, die durch Umsetzung eines Silans oder Siloxans, das SiH-Gruppen aufweist, mit einem olefinischen Epoxid, in Anwesenheit eines tertiären Amins und eines Hydrosilylierungskatalysators (Rhodium- oder Platin-Metallkomplex) erhalten werden. Als olefinisches Epoxid sind insbesondere Limonenoxid, 4-Vinylcyclohexenoxid, Allylglycidylether, Glycidylacrylat, 7-Epoxy-1-octen, Vinylnorbornenmonoxid und Dicyclopentyldienmonoxid brauchbar.
   Weitere Epoxysilikone sind in der US 5,217,805; US 4,421,904 und US 4,547,431 beschrieben, auf deren Offenbarungsgehalt in vollem Umfang Bezug genommen wird.
A2) SiH-funktionelle siliciumorganische Verbindungen, beispielsweise solche der Formel 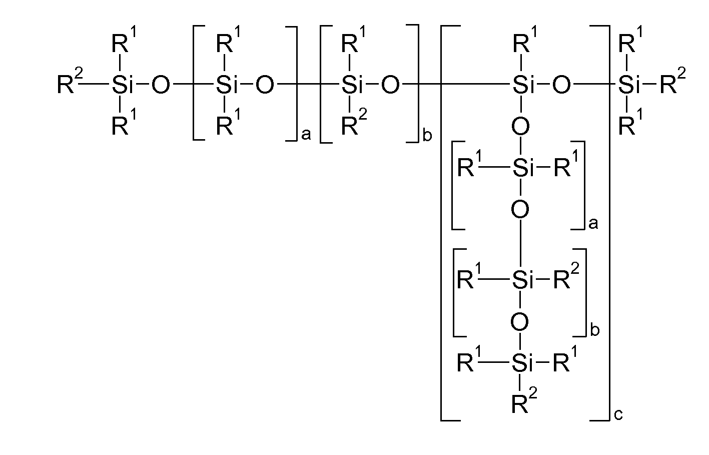 worin R¹ für gleiche oder verschiedene aliphatische oder aromatische Kohlenwasserstoffreste mit 1 bis 20 Kohlenstoffatomen, insbesondere für Methyl, steht; R² für R¹ oder H steht, wobei mindestens die Reste R² für H stehen; a für 5 bis 500, insbesondere 10 bis 100 steht; b für 1 bis 50, insbesondere 1 bis 20, steht; c für 0 bis 5, insbesondere für 0, steht.
   Derartige Polysiloxane sind in der DE 10 2005 001 040 beschrieben, auf deren Offenbarungsgehalt in vollem Umfang Bezug genommen wird.
   Geeignete Silane oder Siloxane sind auch solche der allgemeinen Formel

   R²₃SiO(R³₂SiO)nSiOR²₃

   worin R² und R³ unabhängig voneinander für H oder C₁-C₄-Alkyl insbesondere Methyl, stehen, wobei wenigstens zwei der Reste R² oder R³ für H stehen und n für 1 bis 1000, insbesondere 4 bis 400 steht. Diese Epoxysilikone sind in der EP 578354 A2 beschrieben, auf deren Offenbarungsgehalt in vollem Umfang Bezug genommen wird.
A3) Alkenyloxyfunktionelle siliciumorganische Verbindungen, beispielsweise solche der Formel

   Rₐ(R¹O)_{b}Y_{c}SiO_{d}

   worin a für 0, 1, 2 oder 3 steht; b für 0, 1, 2 oder 3 steht; c für 0 oder 1 steht und die Summe a+b+c für eine Zahl ≥ 1 bis ≤ 4 steht;
   d für 4-(a+b+c+)/2 steht; R, das gleich oder verschieden sein kann, für C₁-C₄-Alkyl, insbesondere Methyl, steht; R¹, das gleich oder verschieden sein kann, für C₁-C₄-Alkyl, insbesondere Methyl, steht; Y für einen Rest der Formel -(CH₂)₂-R²-(A-R³)_{z}-O-CH=CH-CH-R⁴ steht; A für -O-, -S-, -COO- oder -OCO- steht; R² für C₁-C₆-Alkylen oder C₅-C₇-Cycloalkylen steht; R³ für C₂-C₄-Alkylen steht und R⁴ für H oder C₁-C₄-Alkyl steht und z für 0,1 oder 2 steht. Das Molekulargewicht dieser Verbindungen liegt im allgemeinen im Bereich von 200 bis 100 000, insbesondere 230 bis 30 000.
   Diese Verbindungen sind in der EP 396130 A2 beschrieben, auf deren Offenbarungsgehalt in vollem Umfang Bezug genommen wird.
   Weitere vinyloxyfunktionelle Organpolysiloxane sind in der WO 83/03418 beschrieben, auf deren Offenbarungsgehalt in vollem Umfang Bezug genommen wird.
A4) Acrylat- oder Methacrylat-funktionalisierte Polysiloxane mit wenigstens einer Acrylat- oder Methacrylatgruppe. Insbesondere handelt es sich dabei um Organopolysiloxane der folgenden Formeln: 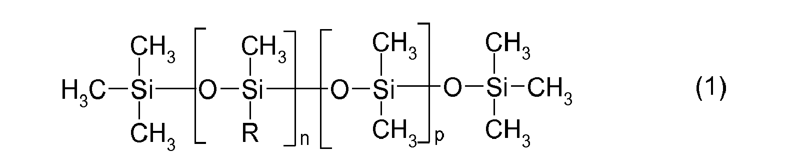 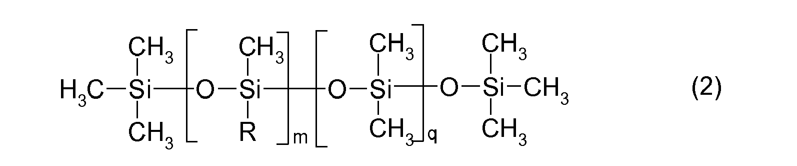 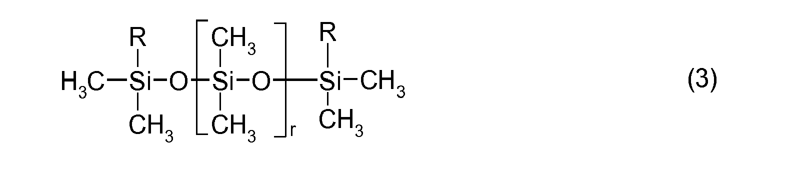 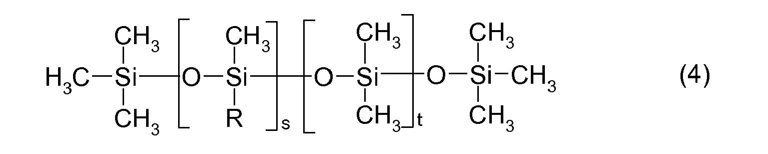 In diesen Formeln stehen R für CH₂=CH(R¹) -COO-(X)ₓ-Y-; n für 5 bis 15; p für 50 bis 150; x für 0 oder 1 bis 100; X für -CH₂CH₂O-, -CH₂-CH(OH) -CH₂-, -CH₂-CH(CH₃) - O-; Y für C₁-C₄-Alkylen. Vorzugsweise stehen x für 0 oder 1, X für -CH₂-CH(OH)-CH₂-O- und Y für -(CH₂)₃; m für 1 bis 10; q für 151 bis 300; r für 20 bis 500; s für 1 bis 10 und t für 301 bis 1000.
   Es kann sich auch um ein Gemisch dieser Organopolysiloxane handeln, das insbesondere 50 bis 100 Gew.-Teile des Organopolysiloxans der Formel (1), 0 bis 50 Gew.-Teile des Organopolysiloxans der Formel (2) und/oder der Formel (3) und 0 bis 10 Gew.-Teile des Organopolysiloxans der Formel (3) umfasst.
   Diese Polyorganosiloxane sind in der US 6,548,568 beschrieben, auf deren Offenbarungsgehalt in vollem Umfang Bezug genommen wird.
   Weitere Acrylat- oder Methacrylat-funktionalisierte Polyorganopolysiloxane sind in der US 6,211,322 beschrieben, auf deren Offenbarungsgehalt in vollem Umfang Bezug genommen wird.
   Weitere Acrylat- oder Methacrylat-funktionalisierte Organopolysiloxane entsprechen der Formel 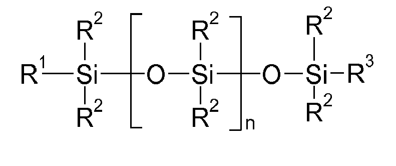 worin R¹ für CH₂=C(R⁴)-COO-X- steht; X für eine Bindung oder C₁-C₄-Alkylen steht; R² für C₁-C₄-Alkyl, insbesondere für Methyl, steht; R³ für R¹ oder R² steht; R⁴ für H oder Methyl steht; und n für 1 bis 300, insbesondere 5 bis 100 steht.
A5) Weitere geeignete siliciumorganische Verbindungen sind diejenigen der Formel 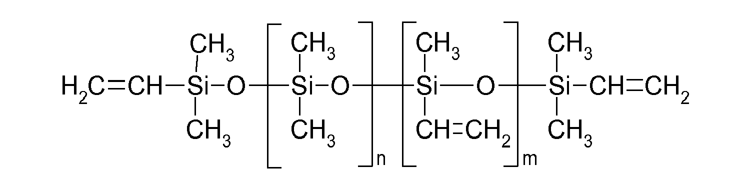 worin n für 90 bis 5000 steht, m für 0 bis 4 steht und n/n+m = 0,96 - 1,0 ist.

Die für die Trennbeschichtung geeigneten siliziumorganischen Verbindungen besitzen im allgemeinen Viskositäten von 150 mPa.s bis 2.000 mPa.s (dynamisch). In der Praxis werden Silikon-Polymere mit Viskositätswerten von 150 - 900 mPa.s bevorzugt, insbesondere solche, die lösemittelfrei verarbeitet werden können.

Die Verbindungen der vorstehenden Formeln I und II können nicht nur die Struktur der Trennschicht beeinflussen, sondern gleichzeitig als reaktiver Verdünner, der sich beim Härten bzw. Vernetzen in die Matrix chemisch einbindet, dienen.

Durch diese Doppelfunktion lassen sich die Rheologie und damit auch die Maschineneigenschaften erfindungsgemäß steuern. Nach dem Abbinden erhält man die gewünschten abhäsiven Eigenschaften.

### B) Ungesättigte Polyesterharze

Ungesättigte Polyesterharze werden durch Polykondensation ungesättigter Dicarbonsäuren mit Diolen gebildet. Sie können durch frei-radikalische Polymerisation oder durch Strahlung gehärtet werden. Geeignete ungesättigte Dicarbonsäuren sind beispielsweise Maleinsäure, Maleinsäureanhydrid oder Fumarsäure. Die ungesättigte Dicarbonsäure wird zweckmäßigerweise zum Teil durch eine gesättigte Dicarbonsäure, wie o-Phthalsäure, Terephthalsäure, Tetrahydrophthalsäure, Adipinsäure oder Sebacinsäure ersetzt. Geeignete Diole sind beispielsweise Alkandiole, wie Ethylenglykol, 1,2-Propandiol, 1,3-Butandiol, Neopentylglykol, Polyethylen- und Polypropylenglykole, insbesondere solche mit einem Molekulargewicht bis 2000, wie Diethylenglykol, Triethylenglykol, Tetraethylenglykol, Dipropylenglykol, Tripropylenglykol oder Tetrapropylenglykol, Bisphenole, wie Bisphenol A, ethoxylierte oder propoxylierte Bisphenole. Die ungesättigten Polyesterharze können auch in Kombination mit Styrol als Reaktivverdünner zur Anwendung kommen. Herstellung und Aufbau von ungesättigten Polyesterharzen sind beispielsweise beschrieben in Kunststoffhandbuch Vol. 10, 1988, Seiten 94ff. Auf diese Publikation wird in vollem Umfang Bezug genommen.

### C) Acrylat- oder methacrylatfunktionalisierte oder allylfunktionalisierte Polyalkylendiole

Acrylat- oder methacrylatfunktionalisierte Polyalkylendiole werden durch Veresterung eines Polyalkylendiols mit Acrylsäure oder Methacrylsäure, allylfunktionalisierte Polyalkylendiole durch Veretherung eines Polyalkylendiols mit Allylalkohol, erhalten. Als Polyalkylendiol verwendet man beispielsweise Polyethylenglykole, Polypropylenglykole oder Copolymere davon, insbesondere solche mit einem Molekulargewicht von 1000 bis 20000.

### D) Acrylsäure- oder Methacrylsäureester

Geeignete Acrylsäure- oder Methacrylsäureester sind Ester der Acryl- oder Methacrylsäure mit C₁-C₁₈-Alkanolen, insbesondere C₁-C₁₂-Alkanolen, wie Methylacrylat, Methylmethacrylat, Ethylacrylat, Ethylmethacrylat, n-Butylacrylat, 2-Ethylhexylacrylat, etc.

### E) Verbindungen, die mit den Verbindungen der Formeln I oder II eine Additionsreaktion eingehen

Zur Polyaddition mit einer Verbindung der Formel I oder II sind besonders solche organische Verbindungen geeignet, die reaktive Wasserstoffatome besitzen. Hierzu gehören u.a. Amide, Amine, gesättigte und ungesättigte ein- und mehrbasische Carbonsäuren und deren Anhydride, Aldehyde und dgl, sowie Isocyanate. Bei den Verbindungen gemäß Formel I verläuft die Addition nach der Markownikoffschen Regel oder bei der radikalischen Addition z.B. unter Einfluss von Strahlen oder Katalysatoren, wie Peroxide, entgegen dieser Regel (Anti-Markownikoff-Addition). Bei den epoxidierten Verbindungen gemäß Formel II erfolgt die Addition an der Epoxidgruppe.

Das Gewichtsverhältnis von Komponente (a) zu Komponente (b) liegt üblicherweise im Bereich von 1:5 bis 2:1, insbesondere im Bereich von 1:3 bis 1:1.

Die erfindungsgemäßen Zusammensetzungen können thermisch bei Temperaturen, die im allgemeinen im Bereich von etwa 0 °C bis etwa 120 °C liegen, oder durch Bestrahlen in Anwesenheit von Initiatoren gehärtet werden. Die Initiatoren können in den erfindungsgemäßen Zusammensetzungen bereits enthalten sein oder unmittelbar vor der Anwendung zugegeben werden. Geeignete Initiatoren zur thermischen Härtung sind insbesondere Peroxide, wie Benzoylperoxid, Wasserstoffperoxid, oder t-Butylhydroperoxid. Geeignete Photoinitiatoren sind dem Fachmann bekannt und beispielsweise beschrieben in der US 5,650,453; US 5,217,805; US 4,547,431; US 4,576,999 und in weiteren oben genannten US-Patentschriften. Die Menge an Initiator liegt im allgemeinen im Bereich von 0,1 bis 10 Gew.-%, bezogen auf das Gesamtgewicht der Zusammensetzung.

Weiter können die erfindungsgemäßen Zusammensetzungen übliche Hilfs- und Zusatzstoffe enthalten, wie Haftvermittler, Härtungsbeschleuniger, Antioxidationsmittel, Bindemittel, Farbstoffe, Pigmente sowie feste teilchenförmige Füllstoffe.

Die erfindungsgemäßen Zusammensetzungen haben den Vorteil, dass sie lösungsmittelfrei formuliert werden können. Die Verwendung von hohen Anteilen an toxikologisch und ökologisch bedenklichen Lösungsmitteln, wie Testbenzin, Toluol, Xylol und Chlorkohlenwasserstoffen, wie es nach dem Stand der Technik erforderlich ist, kann daher vermieden werden. Es ist daher auch kein Verdampfen des Lösungsmittels erforderlich, so dass eine kostspielige Absaugung des Lösungsmittels überflüssig wird und der Zeitzyklus der Anwendung kürzer ist. Die gewünschte Viskosität der Zusammensetzung kann durch die Art und Menge der als Reaktivverdünner zu betrachtenden Komponente (a) eingestellt werden. Da sich die Komponente a) mit ihrem hohen Gehalt an Methylengruppen pro Molekül in die vernetzte Matrix einbaut, werden gleichzeitig die hydrophoben und/oder abhäsiven Eigenschaften des erhaltenen Produkts signifikant verbessert. Die abhäsiven Eigenschaften - gemessen als Trennkraft gegenüber klebrigen Massen - lassen sich somit durch die Menge an Komponente a) graduell einstellen. Auf Grund des hohen Anteils an unpolaren Alkylgruppen können sogar hohe Anteile an der Komponente b) ersetzt und die abhäsiven Eigenschaften trotzdem verbessert werden. Da zur Verwendung der erfindungsgemäßen Zusammensetzungen kein Lösungsmittel erforderlich ist, können sie auch bei niedrigen Temperaturen, z.B. unter 100 °C vernetzt bzw. gehärtet werden. Dadurch werden auch thermosensible Kunststoffbahnen mit den erfindungsgemäßen erhaltenen abhäsiven Zusammensetzungen ausrüstbar. Insgesamt lässt sich dadurch auch die Beschichtungstechnologie günstiger gestalten, weil die Entsorgungsprobleme stark reduziert werden.

Zur Herstellung einer Trennmittelschicht sind insbesondere Zusammensetzungen geeignet, die als Komponente b) eine oder mehrere siliciumorganische Verbindungen A) enthalten. Die erfindungsgemäßen Zusammensetzungen werden zu diesem Zweck auf flächige Substrate, wie Papier, Kunststofffolien, Textilien, Metallfolien, etc. aufgetragen und einer Härtung unterzogen. Zweckmäßigerweise erfolgt die Härtung durch Bestrahlung mit UV-Licht, insbesondere mit einer Wellenlänge von 200 bis 400 nm. Die erforderliche Bestrahlungszeit ist kurz und liegt im Bereich von Sekunden bis zu einigen Minuten. Für die thermische Härtung sind in der Regel Temperaturen im Bereich von 40 bis 90°C ausreichend.

Erfindungsgemäße Zusammensetzungen, die als Komponente b) eine Verbindung B) bis D) enthalten, sind insbesondere als Hydrophobier- und Trennmittel in vielen Bereichen der Technik brauchbar, beispielsweise als Gleitmitteladditiv in Gewindeklebemitteln, zum Hydrophobieren von anorganischen, oragnischen Oberflächen unterschiedlicher Werkstoffe und deren Elemente

Beim Gewindenkleben wird u.a. die erreichbare Vorspannung nur von der Reibzahl (oberflächenabhängig) und dem Schrauben- bzw. Gewindewerkstoff bestimmt. Bekannte Gleitmitteladditive, wie Polyethylenwachspulver, sind geeignet, einerseits die von der Industrie geforderten Reibzahlen bei der Montage erfüllen. andererseits aber besitzen sie den Nachteil, in einer Klebstoffschicht wandern, migrieren und dgl. zu können, wodurch im Laufe der Zeit die "Kleb- und Dichtsicherung" beeinträchtigt bzw. blockiert und das Weiterdrehmoment bzw. Lösemoment der Kleb- und Dichtsicherung erhöht wird. Wie nun überraschenderweise gefunden wurde, verbessern die erfindungsgemäßen Zusammensetzungen die Reibzahlen entscheidend und "konservieren" diese auch während der Lagerung und der Beanspruchung bei Vorspannung und dgl. Außerdem erniedrigen sie das Weiterdrehmoment bzw. Lösemoment der Kleb- und Dichtsicherung.

Die erfindungsgemäßen Zusammensetzungen lassen sich auch mikroverkapseln. Solche Mikrokapseln besitzen Größen von 10 bis 300 µm. In dieser Form können sie auch Gewindevorbeschichtungen zugesetzt werden. Im Allgemeinen setzt man 0,1 - 10 Gew. -% insbesondere 0,1 - 5 Gew.-%, vorzugsweise 0,5 - 3% Gew.-% - bezogen auf 100 Gew. -Teile Vorbeschichtungsmittel, zu.

Als Formentrennmittel (mould release agent) können die Zusammensetzungen bereits als Additiv einer thermoplatischen Zusammensetzung zugesetzt werden. Beim Härten bzw. Vernetzen wird es chemisch in die Matrix eingebunden, wodurch es nicht mehr migrieren kann. Die abhäsiven und gleitenden Eigenschaften bleiben erhalten. Hierbei werden u.a. ökonomische Vorteile beim Herstellen von Spritzgußteilen aus Kunststoffen und sonstigen, gegebenenfalls verstärkten Kunststoffelementen geboten.

Beim freiradikalischen und strahlenchemischen Härten und Vernetzen der erfindungsgemäßen Zusammensetzungen, die ungesättigte Polyesterharze, Acryl-, Methacryl- und Allylverbindungen enthalten, wird eine inerte Schutzschicht gegenüber sauerstoffhaltigen Atmosphären bewirkt. Dadurch wird die Inhibierung der Härtung durch Sauerstoff unterbunden und es entstehen klebfreie Oberflächen. Die Zusatzmengen von Komponente a) können dabei unter 10% - bezogen auf den Gehalt an Komponente b) - liegen. Als Schutzmittel werden sie gleichzeitig in die Kunststoffmatrix integriert. Die Inhibierung der Härtung ist besonders für strahlenhärtbare Erzeugnisse von Interesse, weil dadurch beim Härten auf eine Schutzgasatmosphäre und/oder Zusatz von Synergisten verzichtet werden kann.

Eine weitere besondere Anwendungsform vorliegender Erfindung ist die Herstellung von selbsttragenden Filmen und Folien mit spezifischen hydrophoben und/oder abhäsiven Eigenschaften aus den erfindungsgemäß erhaltenen Formmassen. Mit ihnen lassen sich hydrophobe und/oder schmutzabweisende Folien für das Bauwesen, abhäsiven Trennfolien zum Abdecken und Verpackung von klebrigen Massen und Substraten, wie Haftkleber, Klebefilme und -bänder, erzeugen, die verbesserte Trenneigenschaften (release) aufweisen und wirtschaftlicher und umweltfreundlicher sind, weil die klebenden Massen an ihren Oberflächen nicht anhaften

Die erfindungsgemäßen Zusammensetzungen sind auch zum Imprägnieren und hydrophoben Ausrüsten von Naturstoffen, wie Cellulosefasern, Holzspäne und dergleichen, geeignet anwenden. So lassen sich, wie überraschenderweise gefunden wurde, auch die Holzspäne für die Spanplattenherstellung hydrophob ausrüsten. Diese Funktion erfüllen dagegen die nach dem Stand der Technik verwendeten gesättigten Isoparaffine nicht (siehe Adhäsion Heft 4/1983). Es ist daher anzunehmen, dass die erfindungsgemäßen Zusammensetzungen an den Abbindereaktionen der Polykondensations- oder Polyadditionsleime beteiligt sind.

Die nachfolgenden Beispiele erläutern die Erfindung ohne sie zu begrenzen.

### Beispiele

Die in den Beispielen verwendeten Mengenangaben und -verhältnisse beziehen sich im allgemeinen auf das Gewicht (Gewichtsteile=GT)

### Produkt gemäß Formel I:

2-Octyl-1-dodecen
Dichte (g/cm³): 0,800
Viskosität (40%): 4,5 mm²/sec (kinematisch)
Flammpunkt: 186°C
Doppelbindung: 1

### Produkt gemäß Formel II:

2-Decyl-2-octyloxiran
Dichte (g/cm³): 0,840
Viskosität (20%): 8,6 mPa.s (dynamisch)
Epoxygruppe: 1

### Beispiele 1 und 2

Folgende freiradikalisch härtende Beschichtungsmassen wurden hergestellt:

| | **Beispiel 1** | **Beispiel 2** | **Vergleich** |
|---|---|---|---|
| Bisphenol A-dimethacrylat | 70 | 70 | 70 |
| Produkt gemäß Formel 1 | 30 | 5 | - |
| Methylmethacrylat (Verdünner) | - | 25 | 30 |
| N.N.- Diethylaniline | 1 | 1 | 1 |
| Benzoylperoxid, 50%ig in Weichmacher | 4 | 4 | 4 |

Nach dem Untermischen des Reaktionsinitiators Benzoylperoxid wurden mit den 3 Beschichtungsmassen sandgestrahlte Stahlbleche in einer Schichtstärke von ca. 100 µm beschichtet. Nach ca. 10 bis 12 Minuten gelierten alle 3 Beschichtungsmassen. Während die Beschichtungsmassen nach Beispiel 1 und 2 keine klebrige Oberfläche zeigten und schleifbar waren, war die Oberfläche aus der Vergleichsbeschichtungsmasse klebrig bzw. schmierig

### Beispiele 3 und 4

Folgende additionsvernetzende Trennmittel wurden hergestellt und damit Trennbeschichtungen auf flächigem Trägermaterial durchgeführt.

| | **Beispiel 3** | **Beispiel 4** | **Vergleich** |
|---|---|---|---|
| Polydimethylsiloxan mit Vinylgruppen; Viskosität: 500 m Pa.s, | 75 | 60 | 100 |
| Produkt nach Formel I | 25 | 40 | -- |
| Siloxanwasserstoffvernetzer (siehe Beispiel 7) | 4,8 | 4,8 | 4,8 |
| Katalysator (Hexachlorplatin (IV) Säure | 6,7 | 6,7 | 6,7 |
| Viskosität/20°C, mPa.s | 350 | 280 | 500 |
| Substrat: satiniertes Papier 67g/cm² | | | |
| Auftragsgewicht g/cm² | 2-3 | 2-3 | 2-3 |
| Härtungszeit 100°C sec | 30 | 30 | 40 |
| Härtungszeit 120°C sec | 9 | 9 | 15 |
| Trennkräft nach FINAT 10 mN/cm | 95 | 90 | 93 |
| Restklebrigkeit nach FINAT 11 % | 98 | 95 | 95 |

Durchschnittswerte aus 5 Messungen

### Beispiel 5

100 GT 2-Decyl-2-octyloxirane (Formel II) wurden mit 30 GT Acrylsäure umgesetzt. 3 Mol dieses Umsetzungsproduktes wurden mit 1 Mol Pentaerythrittriacrylat vermischt und auf einem Stahlblech ausgestrichen und durch Bestrahlen mit einer Elektronenstrahldosis von 30 KGy ohne Inertgas-Atmosphäre gehärtet. Das bestrahlte Produkt (Filler) war gut durchgehärtet und hatte keine klebrige Oberfläche.

### Beispiel 6

Es wurde eine Spachtelmasse aus einem hochreaktiven, ungesättigten Polyesterharz Derakane Momentum® Typ 470 - 300(Visk. ca. 350 mPa.s, Styrolgehalt ca 30%) hergestellt und 3 Gew. -% 2-Octyl-1-dodecen (Formel I) zugesetzt. Zum Vergleich wurden anstelle von 2-Octyl-1-dodecen (Formel I) 5 Gew.-% Paraffin zugesetzt. Nach Zugabe von 5% Benzoylperoxid, 50 % in Weichmacher, härtete diese Masse innerhalb von 10 Minuten bei Raumtemperatur aus. Während die Masse mit dem erfindungsgemäßen Zusatz von 2-Octyl-1-dodecen an der Oberfläche klebfrei war, war diese mit Paraffinzusatz noch leicht klebrig.

### Beispiel 7

100 GT eines Silikonacrylates wurde mit 40 GT 2-Octyl-1-dodecen homogen vermischt. Anschließend wurde diese Menge geteilt und damit strahlen- und photochemische Härtungen bzw. Vernetzungen durchgeführt. Der photochemisch härtbaren Masse wurden 5 Gew.-% Diethoxyacetophenon, 2 Gew.-% Benzophenon und 2 Gew.-& eines Amin-Synergisten homogen untergemischt. Mit diesen beiden Mischungen wurden nachstehende Substrate beschichtet und dann gehärtet bzw. vernetzt.

| Substrate | Auftragsstärke µm | ESH- Dosis KGy | UV-Lampe 80W/cm Sekunden |
|---|---|---|---|
| Papier, 67g/m2 | 2 | 30 | 5 |
| Weich -PVC Folie 100µm | 1 | 25 | - |
| OPP-Folie, 100µm | 1 | 12 | - |
| Stahlblech, sandgestrahlt | 30 | 50 | 17 |

Das Silikonacrylat ist eine hexafunktionelle Silikonverbindung der Formel: 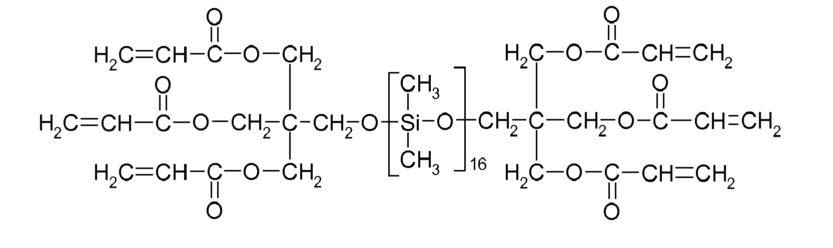 und enthält zusätzlich 10% eines Siloxanwasserstoffvernetzers der Formel

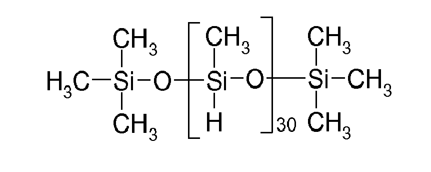

### Beispiele 8 und 9

Folgende additionsvernetzende Silikontrennmittel wurden hergestellt und damit Beschichtungen auf satiniertem Papier (67g/m²) durchgeführt.

| | **Beispiel 8** | **Beispiel 9** | **Vergleich** |
|---|---|---|---|
| Polydimethylsiloxan mit Vinylgruppen Viskosität: 500 m Pa.s, | 50 | 70 | 100 |
| 2-Octyl-1-dodecen | 50 | 30 | - |
| Siloxanwasserstoffvernetzer (siehe Beispiel 7) | 4 | 4 | 4 |
| Katalysator (Hexachlorplatin-(IV)-säure | 0,5 | 0,5 | 0,5 |
| Viskosität/20°C/ mPa.s | 250 | 300 | 500 |
| Substrat: satiniertes Papier 67g/cm² | | | |
| Auftragsgewicht g/cm² | 2-3 | 2-3 | 2-3 |
| Härtungszeit 100°C sec | 30 | 30 | 30 |
| Trennkraft nach FINAT 10 | 27 | 31 | 28 |
| Restklebrigkeit nach FINAT 11 % | 95 | 96,8 | 87,5 |

### Beispiele 10 und 11

Das Beispiel 8 und 9 wurde nach Zusatz von 5 Gew.-% Diethoxyacetophenon, 2 Gew.-% Benzophenon und 2 Gew.-% eines Amin-Synergisten -bezogen auf die Gesamtmenge- und dem Ausrüsten von satinierten Papieroberflächen (67g/m2) mit 2-3 g/m2 mit UV-Strahlen (80Watt/cm) vernetzt und einem Abreiß- und Klebetest unterzogen. Die Ergebnisse sind in Tabelle 1 zusammengefasst

**Tabelle 1: UV-gehärtetes Silikontrennpapier (Papiergewicht 67 g/m²)**

| | | | **Prüfklebebänder** Testing Pressure Sensitive Tapes | | | | **Etikettenklebstoff** Label adhesive | |
|---|---|---|---|---|---|---|---|---|
| | | | **TESAFILM 4970 (Beiersdorf)** | | **TAPE P 69 (PERMACEL)** | | | |
| **LösungsmittelfreiesSilikontrennmittel** | **Auftragsgewicht** | **Bahnge-schwindigkeit** | **Trennkraft** | **Restklebkraft** | **Trennkraft** | **Restklebekraft** | **Trennkraft** | **Restklebrigkeit** |
| Solventless Silicone Release Coat Beispiel / Example | Coating weight | Web speed per UV-lamp 80 Watt /cm | Release Force FINAT No. 10 mN/cm | Subseq. Adhesion FINAT No. 11 | Release Force FINAT No. 10 mN/cm | Subsequent Adhesion FINAT No. 11 | Release Force FINAT No. 10 | Subsequent Adhesion FINAT No. 11 |
| No. | g/m² | m / min. | | % | (g/inch) | % | mN/cm (g/inch) | % |
| Verleich | 2-3 | 100 | 27 | 87 | 200 | 89 | 140 | 90 |
| 9 | 2-3 | 100 | 28 | 95 | 210 | 92,4 | 130 | 93 |
| 10 | 2-3 | 100 | 31 | 96,8 | 190 | 97,5 | 130 | 95 |

Es ist ersichtlich, dass die Verwendung der erfindungsgemäßen Beschichtungsmittel bei allen getesteten Parametern zu überlegenen Eigenschaften führt.

### Beispiel 12:

Es wurde ein Gewindevorbeschichtungsmittel aus mikroverkapselten Acrylaten und Peroxiden in einer toluolhaltigen Acrylatlösung hergestellt. In diese Mischungen sind Füllstoffe, insbesondere gefällte Kreide, eingearbeitet worden. Anschließend wurde diese Mischung geteilt und dem einen Teil wurden 5 Gew.-% mikroverkapseltes 2-Octyl-1-dodecen (15µm) zugesetzt. Mit diesen Mischungen wurden die Gewinde von Schrauben M10, 8.8 beschichtet. Anschließend konnte das Toluol 24 Stunden abdampfen. Dann wurden je 5 Schrauben mit dem Gegengewinde (Mutter) verschraubt und 24 Stunden zur Aushärtung bei Raumtemperatur stehen gelassen. In der Tabelle 2 sind die Ergebnisse zusammengefasst (zum Vergleich wurde ein handelsübliches Produkt verwendet).

**Tabelle 2: Prüfwerte mit Gewindevorbeschichtungsmittel Vergleichende Prüfergebnisse aus 5 Einzelprüfungen an Schrauben M10,8.8 nach 24 Stunden Aushärtung**

| **Vergleich** | | **Beispiel 12** | **Norm** |
|---|---|---|---|
| Überschraubmoment / Nm | 0,48 | 0,41 | DIN 54454 |
| Losbrechmoment / Nm | 25,84 | 19,17 | DIN 54454 |
| Gewindereibzahl µ | 0,33 | 0,29 | VDI Richtlinie 2230 |
| Weiterdrehmoment / Nm | 20,95 | 5,78 | Din 54454 |

Es ist ersichtlich, dass die Verwendung der erfindungsgemäßen Beschichtungsmittel bei allen getesteten Parametern zu überlegenen Eigenschaften führt.

## Patentansprüche

1. Zusammensetzung, umfassend
a) wenigstens eine Verbindung der Formel I oder II 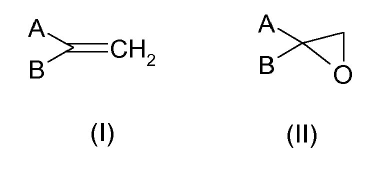 worin A und B, die gleich oder verschieden sein können, für oder eine verzweigte oder unverzweigte Alkylgruppe mit 3 bis 130 Kohlenstoffatomen stehen, wobei jedoch mindestens einer der Reste A und B für eine verzweigte oder unverzweigte Alkylgruppe mit mindestens 6 Kohlenstoffatomen steht, und
b) wenigstens eine mit einer Verbindung der Formel I oder II reaktive oder härtbare Verbindung.

2. Zusammensetzung nach Anspruch 1, wobei A und B zusammen mindestens 12 Kohlenstoffatome enthalten.

3. Zusammensetzung nach Anspruch 1 oder 2, wobei A und B unabhängig voneinander für eine Alkylgruppe mit 6 bis 24 Kohlenstoffatomen stehen.

4. Zusammensetzung nach einem der vorhergehenden Ansprüche, wobei A und B verschieden sind.

5. Zusammensetzung nach Anspruch 3, wobei A für eine unverzweigte Alkylgruppe mit 10 Kohlenstoffatomen und B für eine unverzweigte Alkylgruppe mit 8 Kohlenstoffatomen steht.

6. Zusammensetzung nach einem der vorhergehenden Ansprüche, wobei die Komponente (b) ausgewählt ist unter
A) siliciumorganischen Verbindungen,
B) ungesättigten Polyesterharzen,
C) acrylat-, methacrylat- oder allylfunktionalisierten Polyalkylendiolen,
D) Acrylsäure- oder Methacrylsäureestern und
E) Verbindungen, die eine Additionsreaktion mit der Komponente a) eingehen.

7. Zusammensetzung nach einem der vorhergehenden Ansprüche, wobei die Komponente b) ausgewählt ist unter siliciumorganischen Verbindungen, ungesättigten Polyesterharzen, acrylat- oder methacrylatfunktionalisierten oder allylfunktionalisierten Polyalkylendiolen und Acrylsäure- oder Methacrylsäureestern.

8. Zusammensetzung nach Anspruch 7, wobei die siliciumorganische Verbindung strahlungshärtbar ist.

9. Zusammensetzung nach Anspruch 8, wobei die strahlungshärtbare siliciumorganische Verbindung ein Epoxy-gruppenhaltiges Organopolysiloxan, eine SiH-funktionelle siliciumorganische Verbindung oder ein Acryloxy- oder Methacryloxygruppenhaltiges Organopolysiloxan ist.

10. Zusammensetzung nach Anspruch 9, wobei das Epoxygruppen-haltige Silikon durch Umsetzung eines Silans oder Siloxans, das SiH-Gruppen aufweist, mit einem olefinischen Epoxid, in Anwesenheit eines tertiären Amins und eines Hydrosilylierungskatalysators erhalten werden.

11. Zusammensetzung nach Anspruch 8, wobei die SiH-funktionelle siliciumorganische Verbindung eine Verbindung der Formel
R²₃SiO(R³₂SiO)nSiOR²₃
worin R² und R³ unabhängig voneinander für H oder C₁-C₄-Alkyl stehen, wobei wenigstens zwei der Reste R² oder R³ für H stehen und n für 1 bis 1000, ist.

12. Zusammensetzung nach Anspruch 9, wobei das Acryloxy- oder Methacryloxygruppenhaltige Polysiloxan eine Verbindung der Formel 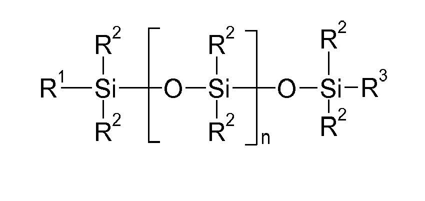 worin R¹ für CH₂=C(R⁴)-COO-X- steht; X für eine Bindung oder C₁-C₄-Alkylen steht; R² für C₁-C₄-Alkyl steht; R³ für R¹ oder R² steht; R⁴ für H oder Methyl steht; und n für 1 bis 300 steht, ist.

13. Zusammensetzung nach einem der vorhergehenden Ansprüche, wobei das Gewichtsverhältnis von Komponente (a) zu Komponente (b) im Bereich von 1:5 bis 2:1, insbesondere im Bereich von 1:3 bis 1:1, liegt.

14. Zusammensetzung nach einem der vorhergehenden Ansprüche zusätzlich umfassend eine Photoinitiator, einen radikalischen Initiator oder einen Initiator für die kationische Härtung.

15. Verwendung einer Verbindung der Formel I oder II zur Herstellung einer abhäsiven Trennschicht.
